# EUROPEAN PATENT APPLICATION

(11) **EP 4 745 580 A1**
(43) Date of publication of application: **20.05.2026**
(21) Application number: 24839538.6
(22) Date of filing: 27.06.2024
(51) Int. Cl.: G01N 35/00, G01N 35/10

(54) **AUTOMATED ANALYSIS DEVICE**

(30) Priority: 11.07.2023 JP 2023113759
(71) Applicant: HITACHI HIGH-TECH CORPORATION, Tokyo 105-6409 (JP)
(72) Inventor: KOBAYASHI, Yuki, Tokyo 105-6409 (JP); IWASA, Sho, Tokyo 105-6409 (JP); FURUYA, Isao, Tokyo 105-6409 (JP)
(74) Representative: MERH-IP Matias Erny Reichl Hoffmann Patentanwälte PartG mbB
(86) International application number: PCT/JP2024/023329
(87) International publication number: WO 2025/013646

(57) **Abstract**

Provided is an automatic analyzer capable of determining a failure of a pressure sensor. The automatic analyzer includes: a first liquid feeding pump 201 configured to feed first cleaning water for cleaning a sample dispensing probe 207 to the sample dispensing probe 207; a first pressure sensor 202 provided in a first cleaning flow path 301 connecting the sample dispensing probe 207 and the first liquid feeding pump 201 and configured to detect a pressure in the first cleaning flow path 301; a second pressure sensor 205 provided at a position in the first cleaning flow path 301 closer to the sample dispensing probe 207 than the first pressure sensor 202 and configured to detect the pressure in the first cleaning flow path 301; and a determination unit 208 configured to determine an abnormality of one or both of the first pressure sensor 202 and the second pressure sensor 205 by comparing a first pressure value output by the first pressure sensor 202 and a second pressure value output by the second pressure sensor 205.

## Description

### Technical Field

The present invention relates to an automatic analyzer.

### Background Art

PTL 1 discloses an automatic analyzer in which "a dispensing abnormality detection unit obtains a liquid amount in a reaction container based on liquid surfaces of the reaction container after dispensing a first reagent detected, after dispensing a sample, and after dispensing a second reagent detected according to liquid surface detection signals from liquid surface detection devices, and detects an occurrence of a dispensing abnormality based on the liquid amount; a defect specification unit performs a defect specification process according to whether the liquid amount in the reaction container is larger or smaller than a predetermined amount when the occurrence of the dispensing abnormality is detected by the dispensing abnormality detection unit, and specifies a defect portion; and a defect resolution processing unit performs a defect resolution process according to the defect portion specified by a defect specification unit 163".

### Citation List

### Patent Literature

PTL 1: JP2009-210336A

### Summary of Invention

### Technical Problem

An automatic analyzer, for example, a biochemical automatic analyzer, automatically analyzes components of a biological sample (hereinafter referred to as a "sample") of a patient such as serum or urine.

In general, such a biochemical automatic analyzer has a function of monitoring a state in the analyzer using various sensors in order to prevent an erroneous analysis result from being output, and issuing an alarm to warn a user when an abnormality is detected (for example, see PTL 1).

In the automatic analyzer, a pressure sensor is used in a flow path to maintain analysis performance. However, since there is no method of detecting a pressure sensor failure in the related art, an analysis operation may be continued in a state where the pressure sensor fails. In such a case, an erroneous analysis result may be output, and thus improvement is required.

In particular, in the method of specifying a defect on an assumption that the pressure sensor is operating normally as in PTL 1, since the defect depends on the operation of the pressure sensor, the defect cannot be specified when the pressure sensor fails, and improvement is required.

The invention provides an automatic analyzer capable of determining a failure of a pressure sensor.

### Solution to Problem

The invention includes a plurality of methods for solving the above problems, and an example thereof includes: a probe configured to dispense a liquid; a first pump configured to feed first cleaning water for cleaning the probe to the probe; a first pressure sensor provided in a first flow path connecting the probe and the first pump and configured to detect a pressure in the first flow path; a second pressure sensor provided at a position in the first flow path closer to the probe than the first pressure sensor and configured to detect the pressure in the first flow path; and a determination unit configured to determine an abnormality of one or both of the first pressure sensor and the second pressure sensor by comparing a first pressure value output by the first pressure sensor and a second pressure value output by the second pressure sensor.

Additional features related to the disclosure will be clarified from the description of the present description and the accompanying drawings. Aspects of the disclosure may be achieved and implemented using elements, combinations of various elements, the following detailed description, and accompanying claims.

It is necessary to understand that description of the present description is merely a typical example, and is not intended to limit the scope of the claims or application examples of the present disclosure in any way.

### Advantageous Effects of Invention

According to the invention, a failure of a pressure sensor can be determined.

### Brief Description of Drawings

FIG. 1 is a diagram showing an overall schematic configuration example of an automatic analyzer according to the present example.
FIG. 2 is a diagram showing a schematic configuration example of a cleaning flow path of a dispensing mechanism in the automatic analyzer according to the present example.
FIG. 3 is a diagram showing a schematic configuration example of another cleaning flow path of the dispensing mechanism in the automatic analyzer according to the present example.
FIG. 4 is a diagram showing a schematic configuration example of still another cleaning flow path of the dispensing mechanism in the automatic analyzer according to the present example.

### Description of Embodiments

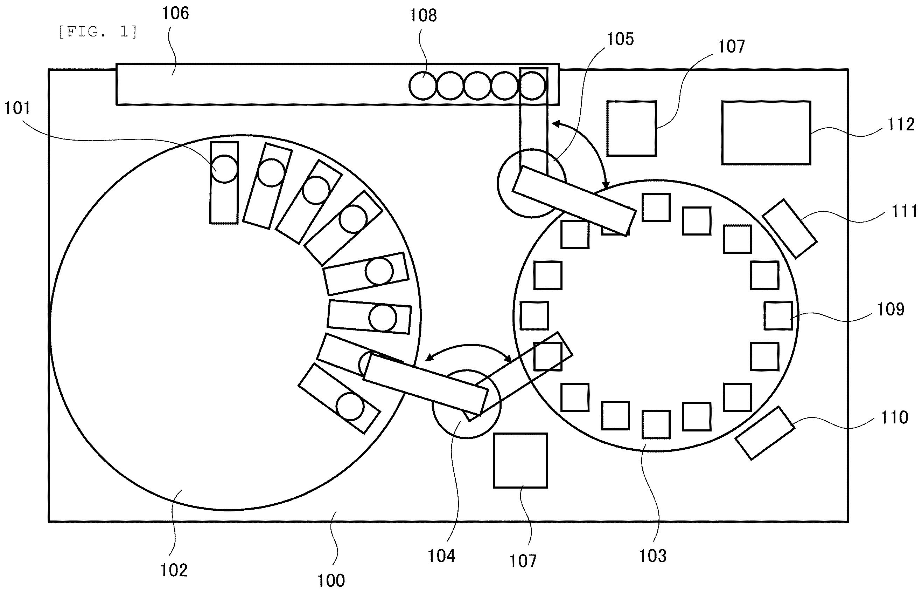

Examples of an automatic analyzer according to the invention will be described with reference to FIGS. 1 to 4. In the drawings used in the present description, the same or corresponding components are denoted by the same or similar reference signs, and repeated descriptions of these components may be omitted.

First, a configuration example of the automatic analyzer will be described with reference to FIG. 1. FIG. 1 is a diagram showing an overall schematic configuration example of an automatic analyzer 100 according to the present example.

The automatic analyzer 100 shown in FIG. 1 includes a reagent disk 102, a reaction disk 103, a reagent dispensing mechanism 104, a sample dispensing mechanism 105, a cleaning tank 107, a measurement unit 110, a cleaning mechanism 111, a control unit 112, and the like.

A sample charged into the automatic analyzer 100 is conveyed by being mounted on a rack 106 in a state of being stored in a sample container 108, which is a test tube. A plurality of sample containers 108 are mounted on the rack 106. The sample is urine or blood such as serum or whole blood. The invention is not limited to a conveyance method using the rack as shown in the figure, and it is possible to adopt a disk method in which the sample container 108 is conveyed by a rotation operation, similar to the reagent disk 102 to be described later.

The reaction disk 103 holds a plurality of cells 109 for performing reaction and measurement. This reaction disk 103 is rotatable and has a disk shape. The cell 109 contains a mixed liquid obtained by mixing and reacting the sample and a reagent.

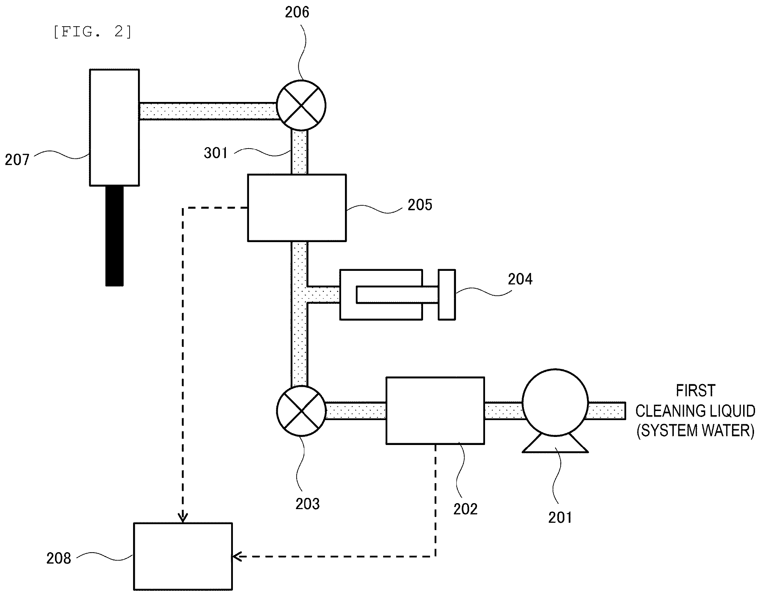

The sample dispensing mechanism 105 moves, by a rotation operation, a sample dispensing probe 207 (see FIG. 2) for dispensing a liquid sample to an aspiration position for aspirating the sample from the sample container 108, an ejection position for ejecting the sample to the cell 109, and a cleaning position for cleaning a tip of the sample dispensing probe 207 in the cleaning tank 107.

Further, the sample dispensing mechanism 105 lowers the sample dispensing probe 207 according to heights of the sample container 108, the cell 109, and the cleaning tank 107 at the aspiration position, the ejection position, and the cleaning position. The sample dispensing probe 207 or a reagent probe is provided with a liquid contact detection sensor (omitted for convenience of illustration) for detecting a liquid surface, and contact thereof with a target liquid (sample or reagent) can be checked based on a sensor signal.

The reagent disk 102 stores a plurality of reagent containers 101 containing reagents to be reacted in the cell 109 and used in an analysis step, and includes a reagent disk and a reagent container holding unit (both illustrations are omitted). The reagent disk 102 has a cold reserving function for improving on-board stability of reagent properties. Each reagent container 101 is filled with a reagent for mixing and reacting with a sample, a reagent necessary for pretreatment of analysis, a detergent, or the like.

In the reagent disk 102, in the case of the disk method, the reagent disk 102 rotates before reagent dispensing to convey an appropriate reagent container to a reagent aspiration position, whereby the reagent dispensing mechanism 104 can aspirate the reagent necessary for analysis. The reagent container 101 may include a plurality of different reagent bottles.

The reagent dispensing mechanism 104 includes a reagent probe (omitted for convenience of illustration) for dispensing a liquid reagent, and is a mechanism for dispensing the reagent or the detergent filled in the reagent container 101 to the cell 109 held by the reaction disk 103. The reagent dispensing mechanism 104 dispenses the reagent or the detergent at a specified timing in a step including analysis or pretreatment thereof and cleaning. Since the configuration of the reagent dispensing mechanism 104 is substantially the same as that of the sample dispensing mechanism 105, the description thereof will be omitted.

The cleaning tank 107 is a mechanism for cleaning a tip of a sample probe of the sample dispensing mechanism 105 and an inner and outer walls of a tip of the reagent probe of the reagent dispensing mechanism 104.

The measurement unit 110 measures a concentration and the like of a target substance to be measured from the mixed liquid of the sample and the reagent during the reaction or after the reaction in the cell 109. A measurement method includes a method of measuring transmitted light, a method of measuring an amount of luminescence, and the like, and varies depending on the target substance to be measured. The measurement method is not limited, and the number thereof is not limited to one, and may be two or more.

The cleaning mechanism 111 includes an ejection nozzle that ejects cleaning water and a detergent, and an aspiration nozzle that aspirates a reaction liquid and the like. The cleaning mechanism 111 cleans the cell 109 with the cleaning water and the detergent.

The control unit 112 is a part that is electrically connected to each mechanism in the automatic analyzer 100 and that controls operations such as opening and closing of a first liquid feeding pump 201 and various solenoid valves (see FIG. 2) to be described later. The control unit 112 can be implemented by, for example, a computer including a display unit implemented by a liquid crystal display or the like, a memory implemented by a hard disk memory or an external memory, an A/D converter, an interface, an input device such as a keyboard, and a CPU, and may be implemented by another computer as a single computer, and is not particularly limited.

The CPU sends a command to the control unit 112 and the like to control the operations of each mechanism. In addition, A/D-converted data (photometric value) obtained from the measurement unit 110 via the A/D converter is taken into the CPU. The CPU performs an arithmetic process using the taken data (photometric value). That is, the CPU can control each mechanism, and can perform the arithmetic process on data.

A memory as a recording device and a keyboard for inputting operation commands and the like are connected to the interface. The memory stores information such as analysis parameters, analysis item requests, a calibration result, and an analysis result.

An operation of each device is controlled by the control unit 112 based on various programs recorded in a storage device. Operation control processes executed by the control unit 112 may be integrated into one program, may be divided into a plurality of separate programs, or may be a combination thereof. A part or all of the programs may be implemented by dedicated hardware or may be modularized.

The display unit includes a user interface such as a touch panel display, and outputs information to a user and receives various inputs from the user.

The above is the configuration of the automatic analyzer 100 according to the present example.

In such the automatic analyzer 100, color development, luminescence, and the like caused by a reaction between a target component in the sample and the reagent are measured by the measurement unit 110, and a concentration of the target component in the sample is calculated by the arithmetic process of the control unit 112.

The configuration of the automatic analyzer 100 is not limited to the form of a single analysis module configuration as shown in FIG. 1, and may be implemented such that two or more modules capable of measuring various same or different analysis items or pretreatment modules for performing pretreatment are connected by a conveyance device.

Next, a configuration example and operation of a characteristic cleaning flow path system in the present example will be described with reference to FIGS. 2 to 4.

In the present example, a cleaning system flow path of a sample dispensing probe will be described as an example, but the technique according to the present example is also applicable to a reagent probe in which the same probe is cleaned and repeatedly used.

FIG. 2 is a diagram showing a schematic configuration example of the cleaning flow path in the automatic analyzer according to the present example. As shown in FIG. 2, the cleaning flow path of the automatic analyzer 100 includes the first liquid feeding pump 201, a first pressure sensor 202, a syringe for sample 204, a second pressure sensor 205, a first solenoid valve 203, a second solenoid valve 206, a determination unit 208, and the like.

The first liquid feeding pump 201 is a pump for feeding first cleaning water (system water) for cleaning the sample dispensing probe 207 to the sample dispensing probe 207, and is connected to a container (not shown) storing the first cleaning liquid.

The first pressure sensor 202 is provided in a first cleaning flow path 301 connecting the sample dispensing probe 207 and the first liquid feeding pump 201, and is a sensor for monitoring a pressure of the first liquid feeding pump 201 by detecting a pressure in the first cleaning flow path 301.

The syringe for sample 204 is a member for driving the sample when aspirating and ejecting (dispensing) the sample.

The second pressure sensor 205 is provided between the syringe for sample 204 and the sample dispensing probe 207 at a position closer to the sample dispensing probe 207 than the first pressure sensor 202 in the first cleaning flow path 301, and is a sensor that monitors a pressure fluctuation of the sample dispensing probe 207 by detecting the pressure in the first cleaning flow path 301.

The first solenoid valve 203 is provided downstream of the first liquid feeding pump 201 between the first pressure sensor 202 and the second pressure sensor 205 in the first cleaning flow path 301.

The second solenoid valve 206 is provided between the sample dispensing probe 207 and the second pressure sensor 205 between the sample dispensing probe 207 and the second pressure sensor 205 in the first cleaning flow path 301.

The determination unit 208 is a part that determines an abnormality of one or both of the first pressure sensor 202 and the second pressure sensor 205 by comparing a first pressure value output by the first pressure sensor 202 and a second pressure value output by the second pressure sensor 205, and is preferably a part of the control unit 112 described above.

The determination unit 208 in the present example determines that both the first pressure sensor 202 and the second pressure sensor 205 are normal when the first solenoid valve 203 is open and the second solenoid valve 206 is closed and a difference between the first pressure value and the second pressure value is within a predetermined value, and determines that one or both of the first pressure sensor 202 and the second pressure sensor 205 is abnormal when the difference exceeds the predetermined value.

In the automatic analyzer 100 according to the present example, the control unit 112 can operate each mechanism in the cleaning flow path system as follows, and the determination unit 208 can determine the presence or absence of an abnormality as follows.

For example, during an aspiration/ejection operation of the sample dispensing probe 207, the control unit 112 closes the first solenoid valve 203 and opens the second solenoid valve 206. At this time, the determination unit 208 detects a dispensing abnormality by monitoring a pressure value of the syringe for sample 204 using a detection value of the second pressure sensor 205.

During a cleaning operation of the sample dispensing probe 207, the control unit 112 opens the first solenoid valve 203 and opens the second solenoid valve 206. At this time, the determination unit 208 detects a cleaning flow rate abnormality by monitoring a pressure value of the first liquid feeding pump 201 using a detection value of the first pressure sensor 202.

When checking whether the first pressure sensor 202 and the second pressure sensor 205 are normal or abnormal, the control unit 112 opens the first solenoid valve 203 and closes the second solenoid valve 206. At this time, since the first cleaning flow path 301 is sealed, a flow of the first cleaning liquid stops, and there is no pressure loss, so that the pressure value of the first liquid feeding pump 201 is displayed on the first pressure sensor 202, and a pressure value based on the pressure of the first liquid feeding pump 201 is also displayed on the second pressure sensor 205.

The determination unit 208 compares the first pressure value output from the first pressure sensor 202 and the second pressure value output from the second pressure sensor 205, determines that both the first pressure sensor 202 and the second pressure sensor 205 are normal when the difference is within an allowable value, and determines that one and/or both are abnormal when the difference exceeds a specified value.

For example, elapse of time of each of the first pressure value and the second pressure value is checked, and when a side where a deviation from a value obtained by a statistical method such as a past average value is within an allowable range is normal, and a side where the deviation is out of the range can be determined to be abnormal when the deviation is outside the allowable range. When both are within the allowable range, it can be determined that there is an abnormality considering that the abnormality occurs after a pressure value detection portion.

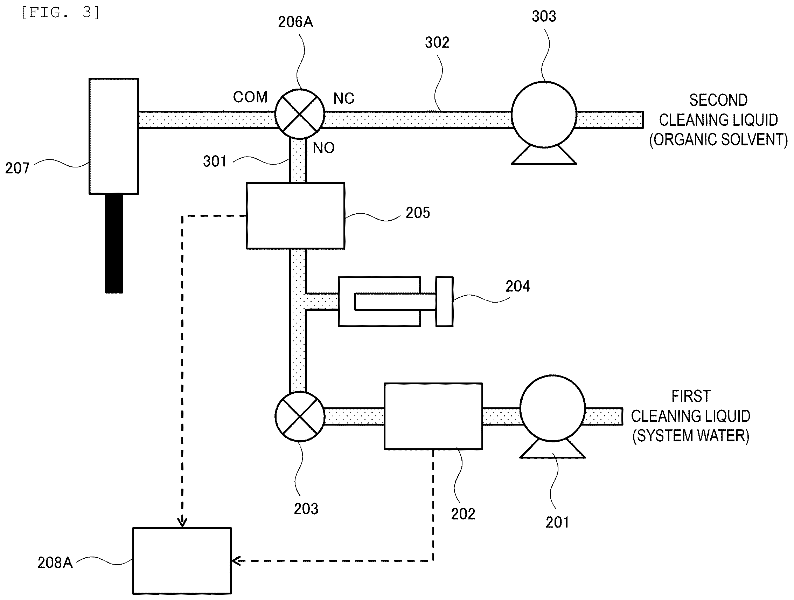

In the automatic analyzer 100, a plurality of cleaning liquids may be selectively used according to a composition of dirt. FIG. 3 is a diagram showing a schematic configuration example of a cleaning flow path when the invention is applied to such an automatic analyzer.

In the configuration shown in FIG. 3, a second liquid feeding pump 303 for feeding second cleaning water (organic solvent) for cleaning the sample dispensing probe 207 to the sample dispensing probe 207 is added to the configuration in FIG. 2. In this form, a second solenoid valve 206A is provided at a connection position between the first cleaning flow path 301 and a second cleaning flow path 302 through which the second cleaning water flows, and can switch a connection destination to the sample dispensing probe 207 between the first cleaning flow path 301 and the second cleaning flow path 302.

When the sample dispensing probe 207 is cleaned with a second cleaning liquid, the control unit 112 closes the first solenoid valve 203 and turns on the second solenoid valve 206A (connection between NC and COM).

In the form shown in FIG. 3, the second solenoid valve 206A has two roles. By closing the second solenoid valve 206A to which the second cleaning flow path 302 is connected, a determination unit 208A can compare the values of the first pressure sensor 202 and the second pressure sensor 205, and the control unit 112 can select the system water (first cleaning liquid) and the second cleaning liquid (organic solvent system) as the cleaning liquid by selectively connecting the first cleaning flow path 301 and the second cleaning flow path 302.

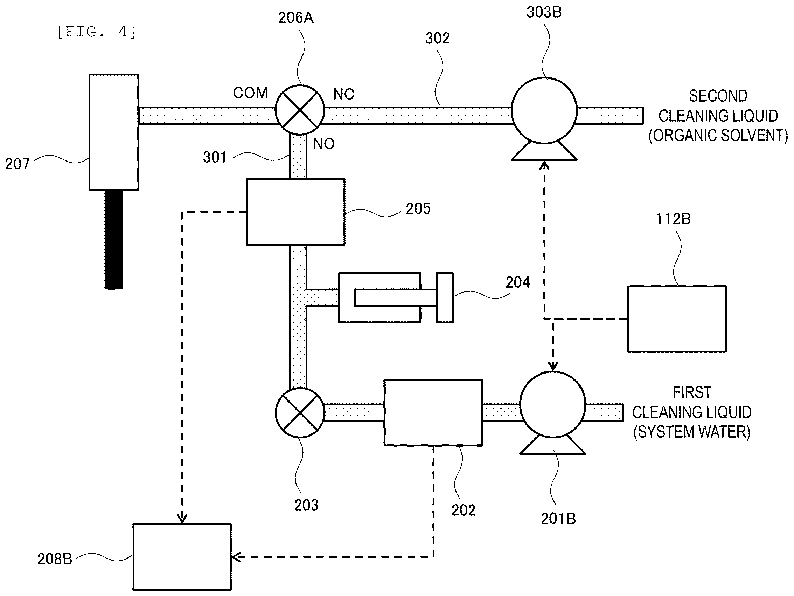

Further, when a plurality of cleaning liquids are selectively used according to the composition of the dirt shown in FIG. 3, it may be desired to be able to adjust a liquid feeding pressure. FIG. 4 is a diagram showing a schematic configuration example of a cleaning flow path when the invention is applied to such an automatic analyzer.

As shown in FIG. 4, a first liquid feeding pump 201B and a second liquid feeding pump 303B are configured such that the liquid feeding pressure can be changed under the control of a control unit 112B. Accordingly, a determination unit 208B can compare the first pressure sensor 202 and the second pressure sensor 205 while changing the liquid feeding pressure, and can thus calibrate one pressure sensor with respect to the other pressure sensor.

In the form shown in FIG. 4, the liquid feeding pressure can chang in only one of the first liquid feeding pump 201B and the second liquid feeding pump 303B. In the form shown in FIG. 2, the liquid feeding pressure of the first liquid feeding pump 201 can be changed.

Next, effects of the present example will be described.

The automatic analyzer 100 according to the present example described above includes: the sample dispensing probe 207 configured to dispense a liquid; the first liquid feeding pump 201 configured to feed the first cleaning water for cleaning the sample dispensing probe 207 to the sample dispensing probe 207; the first pressure sensor 202 provided in the first cleaning flow path 301 connecting the sample dispensing probe 207 and the first liquid feeding pump 201 and configured to detect the pressure in the first cleaning flow path 301; the second pressure sensor 205 provided at a position in the first cleaning flow path 301 closer to the sample dispensing probe 207 than the first pressure sensor 202 and configured to detect the pressure in the first cleaning flow path 301; and the determination unit 208 configured to determine an abnormality of one or both of the first pressure sensor 202 and the second pressure sensor 205 by comparing the first pressure value output by the first pressure sensor 202 and the second pressure value output by the second pressure sensor 205.

In this manner, by providing two pressure sensors (the first pressure sensor 202 and the second pressure sensor 205) and comparing the detection values thereof, it is possible to determine an abnormality of one or both of the pressure sensors, and thus it is possible to prevent a cleaning failure or a dispensing failure of the dispensing probe caused by the abnormality of the pressure. Therefore, analysis accuracy of the automatic analyzer 100 can be maintained. Further, by determining a cause of the abnormality, it is possible to accurately normalize an abnormal portion and shorten a stop time of the analyzer.

In addition, the first solenoid valve 203 provided between the first pressure sensor 202 and the second pressure sensor 205 in the first cleaning flow path 301 and the second solenoid valve 206 provided between the sample dispensing probe 207 and the second pressure sensor 205 in the first cleaning flow path 301 are further provided, and when the first solenoid valve 203 is open and the second solenoid valve 206 is closed, the determination unit 208 determines that both the first pressure sensor 202 and the second pressure sensor 205 are normal when the difference between the first pressure value and the second pressure value is within the predetermined value, and determines that one or both of the first pressure sensor 202 and the second pressure sensor 205 is abnormal when the difference exceeds the predetermined value, and thus it is possible to determine the presence or absence of an abnormality of the first pressure sensor 202 and the second pressure sensor 205 with high accuracy, and to further improve reliability.

Further, the second liquid feeding pump 303 configured to feed the second cleaning water for cleaning the sample dispensing probe 207 to the sample dispensing probe 207 is further provided, the second solenoid valve 206A is provided at the connection position between the first cleaning flow path 301 and the second cleaning flow path 302 through which the second cleaning water flows, and the first cleaning flow path 301 and the second cleaning flow path 302 can be switched, so that it is possible to cope with a form in which a plurality of cleaning liquids are selectively used according to the composition of dirt.

In addition, the first liquid feeding pump 201B and the second liquid feeding pump 303B are configured such that the liquid feeding pressure can be changed, and thus calibration of the pressure sensor and the like can also be performed.

Further, the syringe for sample 204 configured to drive the liquid when dispensing the liquid is further provided, and the second pressure sensor 205 is provided between the syringe for sample 204 and the sample dispensing probe 207 in the first cleaning flow path 301, so that it is easier to detect a failure of either one of the pressure sensors by comparing signal values under the same pressure.

### <Others>

The invention is not limited to the embodiments described above, and various modifications and applications are possible. The embodiments described above are described in detail for easy understanding of the invention, and are not necessarily limited to those having all the configurations described above.

### Reference Signs List

- 100:: automatic analyzer
- 101:: reagent container
- 102:: reagent disk
- 103:: reaction disk
- 104:: reagent dispensing mechanism
- 105:: sample dispensing mechanism
- 106:: rack
- 107:: cleaning tank
- 108:: sample container
- 109:: cell
- 110:: measurement unit
- 111:: cleaning mechanism
- 112, 112B:: control unit
- 201, 201B:: first liquid feeding pump
- 202:: first pressure sensor
- 203:: first solenoid valve
- 204:: syringe for sample
- 205:: second pressure sensor
- 206, 206A:: second solenoid valve
- 207:: sample dispensing probe
- 208, 208A, 208B:: determination unit
- 301:: first cleaning flow path (first flow path)
- 302:: second cleaning flow path (second flow path)
- 303, 303B:: second liquid feeding pump

## Claims

1. An automatic analyzer comprising:
a probe configured to dispense a liquid;
a first pump configured to feed first cleaning water for cleaning the probe to the probe;
a first pressure sensor provided in a first flow path connecting the probe and the first pump and configured to detect a pressure in the first flow path;
a second pressure sensor provided at a position in the first flow path closer to the probe than the first pressure sensor and configured to detect the pressure in the first flow path; and
a determination unit configured to determine an abnormality of one or both of the first pressure sensor and the second pressure sensor by comparing a first pressure value output by the first pressure sensor and a second pressure value output by the second pressure sensor.

2. The automatic analyzer according to claim 1, further comprising:
a first solenoid valve provided between the first pressure sensor and the second pressure sensor in the first flow path; and
a second solenoid valve provided between the probe and the second pressure sensor in the first flow path, wherein
in a case where the first solenoid valve is open and the second solenoid valve is closed, the determination unit determines that both the first pressure sensor and the second pressure sensor are normal when a difference between the first pressure value and the second pressure value is within a predetermined value, and determines that one or both of the first pressure sensor and the second pressure sensor is abnormal when the difference exceeds the predetermined value.

3. The automatic analyzer according to claim 2, further comprising:
a second pump configured to feed second cleaning water for cleaning the probe to the probe, wherein
the second solenoid valve is provided at a connection position of the first flow path and the second flow path through which the second cleaning water flows, and is configured to switch the first flow path and the second flow path.

4. The automatic analyzer according to claim 1, wherein
the first pump is configured to change a liquid feeding pressure.

5. The automatic analyzer according to claim 3, wherein
the second pump is configured to change a liquid feeding pressure.

6. The automatic analyzer according to claim 1, further comprising:
a syringe configured to drive the liquid when dispensing the liquid, wherein
the second pressure sensor is provided between the syringe and the probe in the first flow path.
